# EUROPEAN PATENT SPECIFICATION

(11) **EP 2 428 964 B1**
(45) Date of publication and mention of the grant of the patent: **21.05.2014**
(21) Application number: 10772316.5
(22) Date of filing: 22.04.2010
(51) Int. Cl.: G21C 3/32, G21C 3/328, G21C 3/334, G21C 3/322

(54) **Fuel assembly for VVER-440 type nuclear reactor**
Brennelement für WWER-440 Typ Kernreaktor
Assemblage de combustible pour réacteur nucléaire du type VVER-440

(30) Priority: 05.05.2009 RU 2009116831
(43) Date of publication of application: 14.03.2012
(73) Proprietor: Open Joint-Stock Company "Tvel", Moscow 115409 (RU); Joint-Stock Company "Novosibirsk Chemical Concentrates Plant", Novosibirsk 630110 (RU); Otkritoye Akcionernoe Obshchestvo "Mashinostroitelny Zavod", Elektrostal 144001 (RU)
(72) Inventor: LUNIN, Gleb Leonidovich, 123060 Moscow (RU); DUKHOVENSKIY, Andrey Sergeevich, 123458 Moscow (RU); DORONIN, Aleksandr Sergeevich, 123557 Moscow (RU); FOLOMEEV, Vladimir Ivanovich, 249022 Kaluzhskaya obl. (RU); LIKHACHEV, Yuriy Ivanovich, 249033 Kaluzhskaya obl. (RU); LUSHIN, Vladimir Borisovich, 142100 Moskovskaya obl. (RU); TUTNOV, Aleksandr Aleksandrovich, 123098 Moscow (RU); KUKUSHKIN, Yuriy Anatolievich, 117303 Moscow (RU); YENIN, Anatoliy Alekseevich, 630110 Novosibirsk (RU); USTIMENKO, Aleksandr Pavlovich, 630129 Novosibirsk (RU); BRODA, Valeriy Adimovich, 630129 Novosibirsk (RU); ODINTSOV, Nikolay Vladimirovich, 144000 Moskovskaya obl. (RU); MALAKHOV, Aleksandr Anatolievich, 144010 Moskovskaya obl. (RU); KURKIN, Andrey Mikhailovich, 630089 Novosibirsk (RU)
(74) Representative: Isarpatent
(86) International application number: PCT/RU2010/000195
(87) International publication number: WO 2010/128893

(56) References cited:
- EP-A1- 0 986 068
- GB-A- 1 114 706
- RU-C1- 2 126 999
- RU-C2- 2 216 056
- RU-C2- 2 234 752
- RU-C2- 2 234 752
- US-A- 3 733 252
- US-A1- 2007 153 963
- US-A1- 2007 165 766

## Description

### Field of the Invention

This invention relates to nuclear power engineering, in particular to designs of working cassettes (or assemblies) of VVER-440 type nuclear power reactor cores having thermal power output ranging from 1,150 Mw to 1,700 Mw.

### Description of Prior Art

A working cassette is known that may be used for forming the core of a VVER-440 reactor (see: RU 2126999, C21C 1/04, 02/27/1999). This working cassette comprises from 216 to 270 fuel rods having a cladding outer diameter from 5.85 millimeters to 6.17 millimeters and/or from 6,66 millimeters to 6.99 millimeters. The installation step of the fuel elements along a triangular grid in the working cassette and their diameter are chosen according to the condition of providing the water-uranium ratio from 1.6 to 2.0. The known working cassette has improved functionality both under the normal operation conditions and in emergency modes. The VVER-440 reactor core formed from such cassettes enables to expand the reactor power maneuvering range and improve nuclear fuel burnup. Also, this working cassette reduces the possibility of fuel elements depressurization, which is conditioned by the use of fuel elements having a diameter lesser than that of standard fuel elements.

Further, a working cassette for a commercial VVER-440 reactor is known, which comprises a casing, a hexagonal bundle of fuel elements that is arranged in spacers located along the cassette length, and a top nozzle and a bottom nozzle of the cassette (see: Shmelyov V.D., Dragounov Yu. G., Denisov V.P., Vasilchenko I.N., Cores of VVERs for Nuclear Power Stations, IKTs "Academkniga", M., 2004, p. 37-40).

The known working cassette, which is used for forming cores of reactors of VVER-440 type, consists of 126 fuel rods having the diameter of 9.1 millimeters that are arranged inside a hexagonal casing to the ends of which the cassette top nozzle and bottom nozzle are connected. The fuel elements are secured to the lower end support grid and are spaced into a bundle with the step of 12.2 millimeters by eleven honeycomb spacers that are pre-formed into a framework on the central tube. The working cassette design provides for axial displacements of the hexagonal spacers along the central tube and the fuel elements in the spacer cells, which is necessary for compensating non-uniform elongations of fuel elements due to temperature and radiation that occur during operation.

The availability of the casing introduces an undesired metal into the core and negatively affects heat transfer conditions in emergency situations associated with coolant loss, etc.

The closest to this invention as to the technical essence and the achieved result is a working cassette of a nuclear reactor having thermal power output from 1,150 Mw to 1.700 Mw, which comprises a lower end portion and an upper end portion, which are connected by a framework constructed from angular support elements connected by contact welding to spacers formed from cells arranged as a triangular grid forming coaxial hexagonal rows around the central tube (see: RU 2234752, C21C 3/30, 08/20/2004).

The known design of a working cassette features an upper end portion, a lower end portion and spacers fixedly connected to the support angular elements made of a zirconium alloy, the width d of the strap span being selected in the range 0.117·H to 0.177·H, where H is the working cassette "turn-key" size. The availability of the angular support elements improves the rigidity of the working cassette frame. However, an experimental study of the known fuel assembly design shows that the angular support elements mainly perform the function of guides ensuring movements of ERC cassettes without engagement of working cassette spacers. At the same time, skeleton spacers, which do not have necessary flexural rigidity, are subjected to bidirectional bending when interacting with a fuel element bundle, due to which the strength of the cassette frame and flexural rigidity of the working cassette are insufficient for ensuring a required service life in the operation conditions. Thus, the availability of angular support elements does not provide for sufficient rigidity of a working cassette without a casing.

Another example of a known fuel assembly for a nuclear reactor is described in the United States Patent Application Publication No. US 2007/0165766 A1.

### Summary of the Invention

The objective of this invention is to design and develop a working cassette (fuel assembly) for a nuclear reactor with thermal power output in the range from 1,150 Mw to 1,700 Mw, the cassette having improved characteristics.

If this objective is achieved, new technical effects may be obtained that consist in increasing rigidity and strength of an overall working cassette design, reducing non-uniformity of energy release in the working cassette volume, improving fuel use efficiency due to raising the water-uranium ratio and ensuring the cassette geometric stability that is especially important when realizing fuel cycles with deep (up to 65-70 Mw-day/kg_{U}) burnup of fuel.

The above technical effects are achieved according to a first embodiment of this invention due to the fact that a fuel assembly for a nuclear reactor of VVER-440 type with thermal power output in the range from 1,150 Mw to 1,700 Mw according to claim 1 is provided, which comprises a lower end and an upper end portions connected by a framework constructed from angular support elements connected by contact welding to spacers formed by cells that are arranged according to a triangular grid so as to form coaxial hexagonal rows around the central tube, wherein three or six framework tubes are arranged at an equal angular spacing around the central tube axis in the second, or third, or fourth row from the center and the three or six framework tubes are arranged in the corners or midpoints of the sides of the row that is the third from the center, said framework tubes being fixedly connected to the lower end portion and to the adjacent cells.

The distinguishing feature according to the first embodiment is that three or six framework tubes are arranged at an equal angular spacing around the central tube axis in the second, or third, or fourth row from the center instead of cells and are connected to the lower end portion and fixedly connected to the adjacent cells. As a result, the strength and rigidity of the working cassette are increased due to changing the fuel elements and the corresponding cells in the second, or third, or fourth row from the center by framework tubes.

The above technical effects are achieved according to the second embodiment of this invention, as claimed in claim 10, due to the fact that a fuel assembly for a nuclear reactor of VVER-440 type with thermal power output in the range from 1,150 Mw to 1,700 Mw is provided, which comprises a lower end and an upper end portions connected by a framework constructed from angular support elements connected by contact welding to spacers formed by cells that are arranged according to a triangular grid so as to form coaxial hexagonal rows around the central tube, wherein six framework tubes are arranged in threes in equally spaced positions at an equal angular spacing of 120 degrees around the central tube axis in the corners of either the third and fourth rows or the third and second rows from the center instead of cells and are connected to the lower end portion and to the adjacent cells.

The distinguishing feature according to the second embodiment is that framework tubes are arranged in threes at an equal angular spacing of 120 degrees around the central tube axis in the corners of either the third and fourth rows or the third and second rows from the center instead of cells and are connected to the lower end portion and fixedly connected to the adjacent cells.

The above technical effects are achieved according to the third embodiment of this invention, as claimed in claim 18, due to the fact that a working cassette for a nuclear reactor of VVER-440 type with thermal power output in the range from 1,150 Mw to 1,700 Mw is provided, which comprises a lower end and an upper end portions connected by a framework constructed from angular support elements connected by contact welding to spacers formed by cells that are arranged according to a triangular grid so as to form coaxial hexagonal rows around the central tube, wherein six framework tubes are arranged in threes in equally spaced positions at an equal angular spacing of 120 degrees around the central tube axis in the corners or in the midpoints of sides of the fourth and second rows from the center instead of cells and are connected to the lower end portion and to the adjacent cells.

The distinguishing feature according to the third embodiment is that framework tubes are arranged in threes in equally spaced positions at an equal angular spacing of 120 degrees around the central tube axis in the corners or in the midpoints of sides of the fourth and second rows from the center instead of cells and are connected to the lower end portion and to the adjacent cells.

The distinguishing feature of each embodiment is the selection of positions for arranging framework tubes. If framework tubes are arranged in the first row from the center, the framework rigidity is not practically increased, but an insignificant increase in the cassette central region occurs. If framework tubes are arranged in the corners or the midpoints of the fifth or sixth row, the framework rigidity is not practically increased also, but an insignificant increase in the cassette peripheral region occurs.

Furthermore, the arrangement of framework tubes in the cassette central region or peripheral region results in non-uniformity of the water-uranium ratio in the cross-section of the working cassette, which leads to non-uniform energy release in the cross-section of the working cassette.

It is preferable in the first embodiment to arrange framework tubes either in the corners of the second, or the third, or the fourth row, or in the midpoints of the sides of the second or fourth row.

For all embodiments of this invention:
- preferably, the width **d** of the span of the angular support element is selected so as to be in the range from 1.71·t to 1.91·t, where **t** is a pitch of the triangular grid;
- preferably, the pitch **t** of the triangular grid is selected so as to be in the range from 12.55 millimeters to 12.65 millimeters;
- preferably, the framework is connected with the upper end portion via a separable connection;
- preferably, a threaded connection in the form of screws is used as the separable connection, wherein the threaded portion of the screws interacts with corresponding thread made in the cassette upper end portion;
- preferably, the framework tubes and angular support elements are made of the zirconium alloy E635;
- preferably, the framework tubes are made so as their inner cavity may be filled with a coolant;
- preferably, welding is used for connecting the framework tubes to the adjacent cells, and welding, or thread or a collet is used for connecting them to the lower end portion.

An analysis of the solutions known from the prior art does not reveal a device matching embodiments of this invention in the totality of essential features included into the independent claims, which proves that the present invention complies with the patentability criterion of novelty.

A fuel assembly for a nuclear reactor is knows in the art that partially comprises features similar to the features of this invention, see: RU 2093906, C1, C21C 3/30, 1997. The known working cassette is designed for use in a nuclear reactor with thermal power output of 3000 Mw. The common features of that known and this invention are the features relating to the availability of support elements in the form of angular plates made of a zirconium alloy and fixedly connected to the lower end portion and spacers, as well as the availability of hollow tubes (guide channels). However, in the known solution the angular support plates (elements) are not connected to the upper end portion, which does not enable to use them as a single framework for a bundle of fuel elements and a whole cassette. The known solution teaches that the cassette rigidity is formed by angular support elements, and guide channels do not significantly affect the rigidity formation, since they have no fixed connection to spacers. Thus, the totality of the distinguishing features of this invention does not follow from the prior art, and the known features do not enable to get a result consisting in increasing the rigidity of the design of the whole working cassette, raising the efficiency of fuel use due to improving the water-uranium ratio in the cassette cross-section and ensuring the cassette geometrical stability, which is especially important for realizing fuel cycles with deep fuel burnup. Therefore, this invention complies with the patentability criterion of inventive step.

### Brief Description of the Drawings

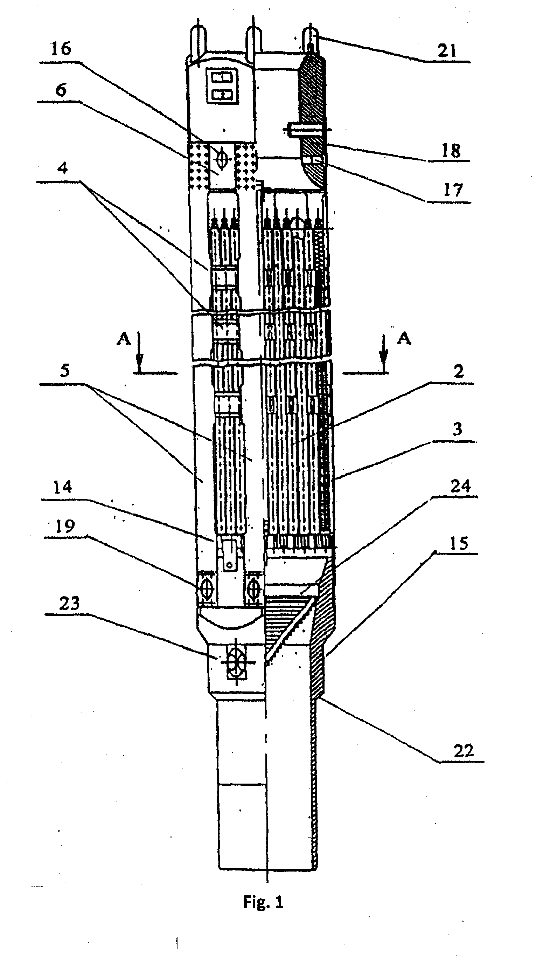

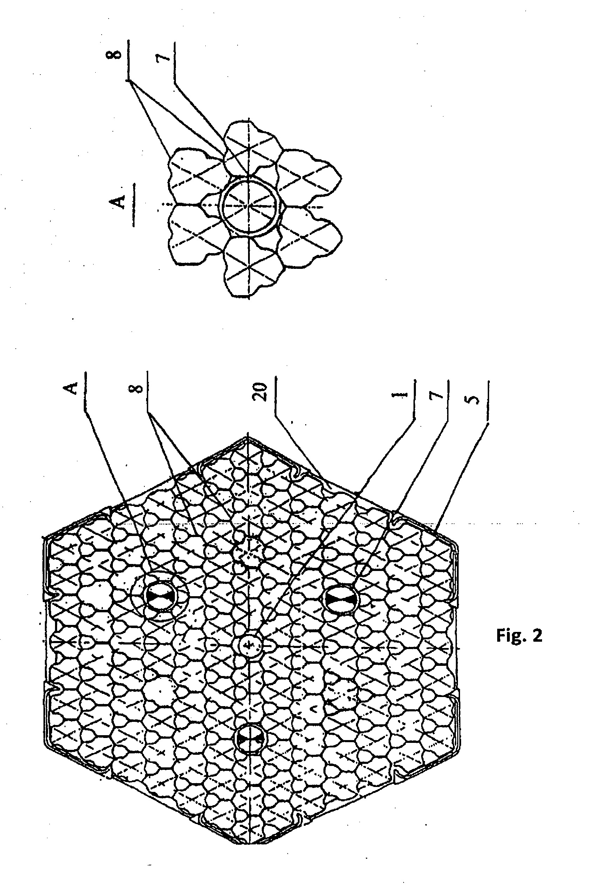

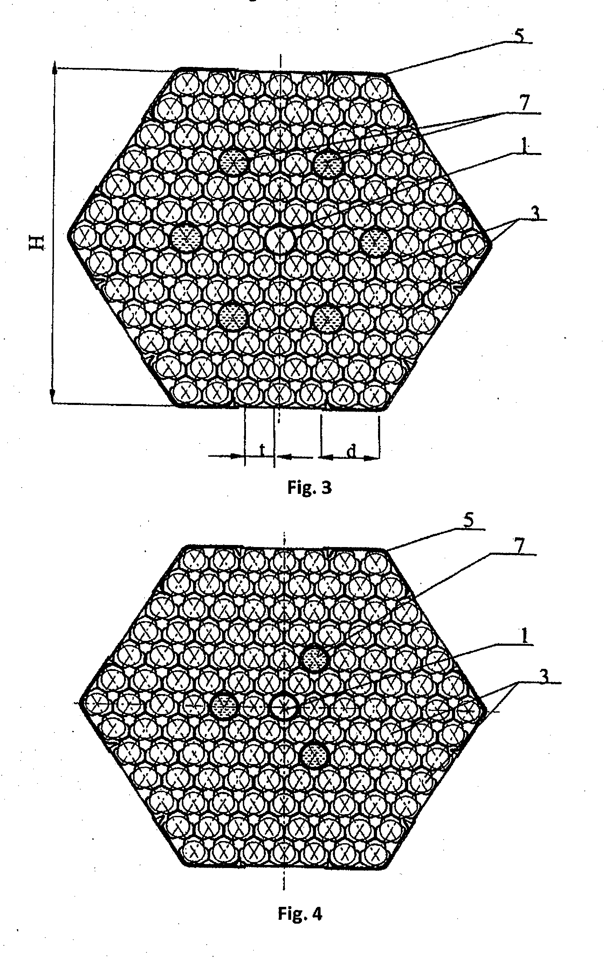

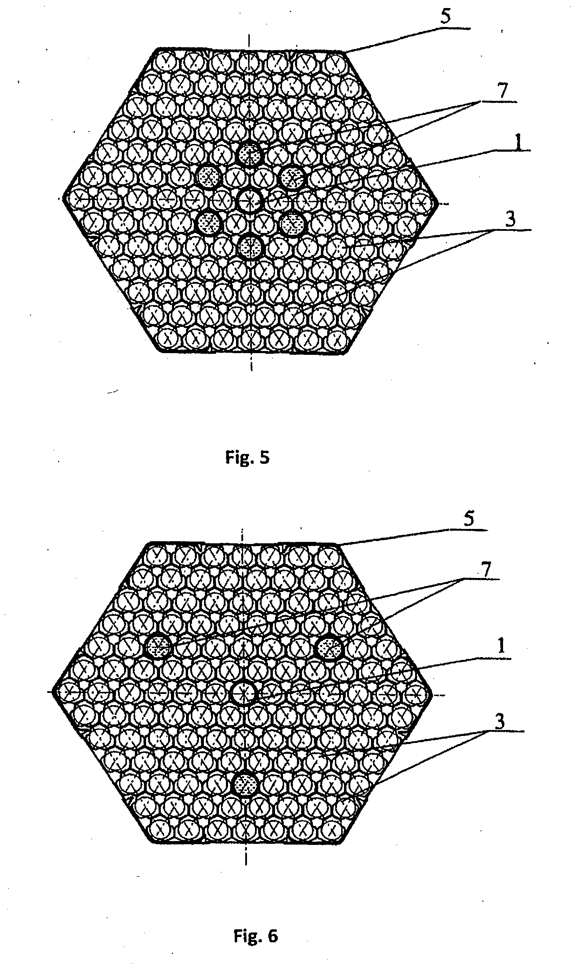

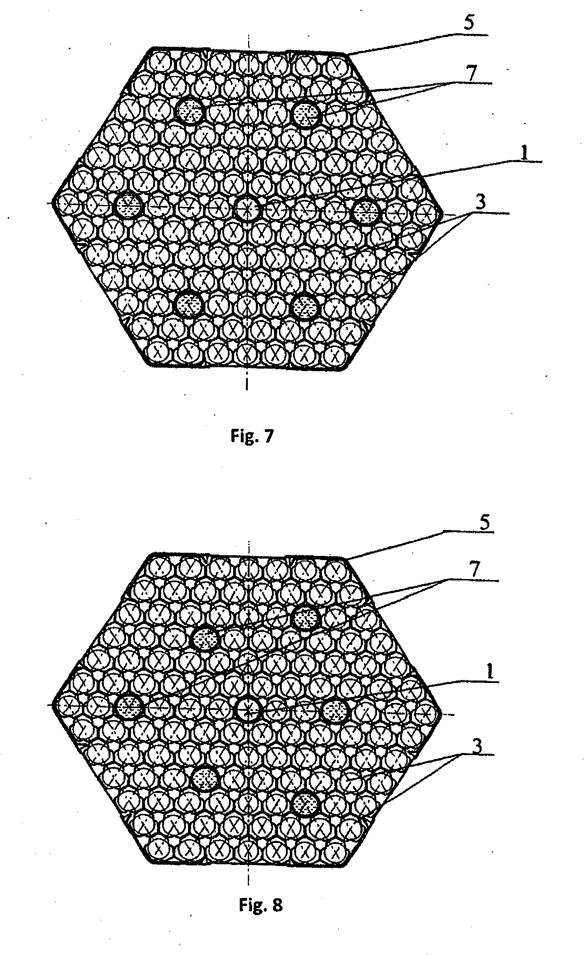

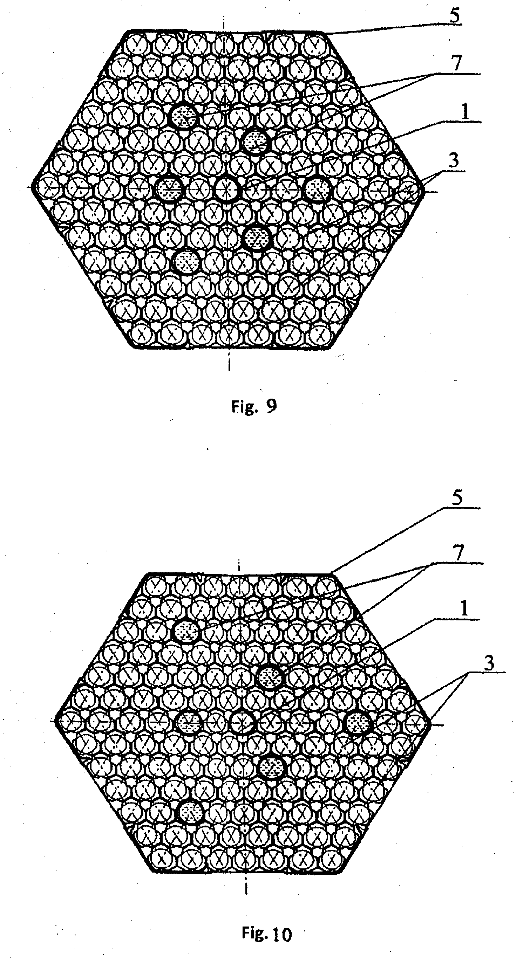

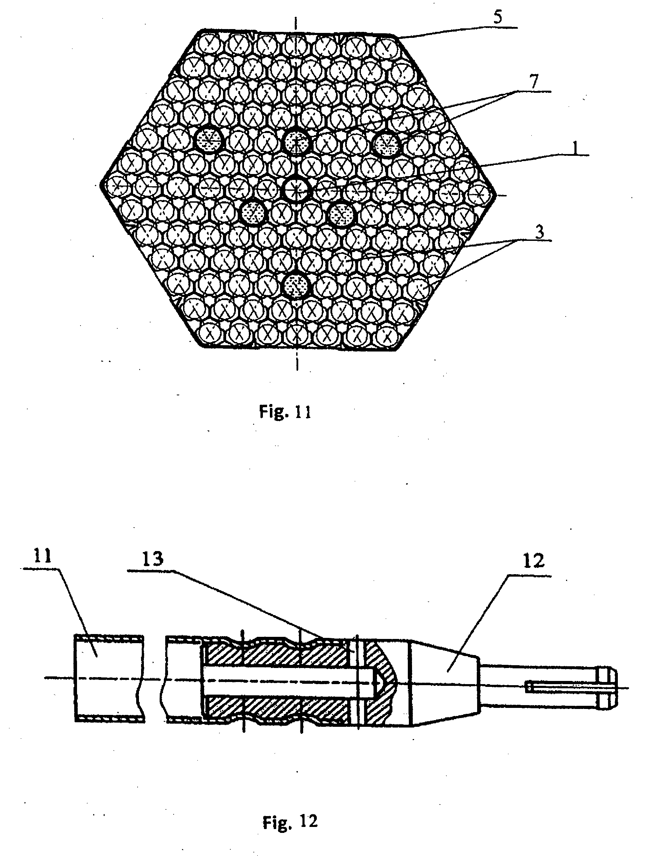

Fig. 1 shows a general view of a fuel assembly for a nuclear reactor, Fig. 2 shows the first variant of the cross-section A-A of Fig. 1, Fig. 3 shows the second variant of the cross-section A-A of Fig. 1, Fig. 4 shows the third variant of the cross-section A-A of Fig. 1, Fig. 5 shows the fourth variant of the cross-section A-A of Fig. 1, Fig. 6 shows the fifth variant of the cross-section A-A of Fig. 1, Fig. 7 shows the sixth variant of the cross-section A-A of Fig. 1, Fig. 8 shows the seventh variant of the cross-section A-A of Fig. 1, Fig. 9 shows the eighth variant of the cross-section A-A of Fig. 1, Fig. 10 shows the ninth variant of the cross-section A-A of Fig. 1, Fig. 11 shows the tenth variant of the cross-section A-A of Fig. 1, Fig. 12 shows a framework tube.

### Best Mode for Carrying Out the Invention

The working cassette for a nuclear reactor with thermal power output from 1,150 Mw to 1,700 Mw comprises a central tube 1 and a bundle 2 of fuel elements 3, the said bundle being arranged in hexagonal spacers 4 longitudinally spaced in the working cassette (see Fig. 1 - Fig. 3). The pitch of fuel elements 3 in the bundle 2 is in the range from 12.55 to 12.65 millimeters. The working cassette framework comprises six angular support elements 5, nine spacers 4, a hexagonal shell 6 and framework tubes 7. The hexagonal spacers 4 include cells 8 arranged according to a triangular grid so as to form coaxial hexagonal rows around the central tube 1 (see Fig. 2 - Fig. 11). Three (see Figs. 2, 4, 6) or six (see Figs. 3, 5, 7) framework tubes 7, which are fixedly connected to the adjacent cells 8 by contact-spot welding, are arranged in the second, or third, or fourth row from the center at an equal angular pitch around the central tube axis. In the other embodiments of the working cassette six framework tubes 7, which are fixedly connected by contact-spot welding to the adjacent cells 8, are alternatively arranged in the corners of the third and fourth rows from the center (see Fig. 8), or in the corners of the third and second rows from the center (see Fig. 9), or in the corners of the fourth and second rows from the center (see Fig. 10), or in the midpoints of the sides of the fourth and second rows (see Fig. 11).

The framework tube (see Fig. 12) is a zirconium tube 11 with a steel cap 12 in the lower end. Holes 13 are made in the cap 12 for passing a coolant through the cavities of the framework tubes during the cassette operation, which results in improving the cassette water-uranium ratio, since the hollow framework tubes are arranged instead of fuel elements. The cap 12 is made with the possibility of being fixed by welding, a threaded or collet connection in the steel lower grid 14 of the lower end portion 15 of the cassette. The zirconium alloy E635 is used as the material for the tube 11.

Dimples are made on the external surface of the hexagonal shell 6 in the places for securing the angular support elements, which are necessary for ensuring that the angular support elements do not protrude over the surface of the hexagonal shell. A through hole 16 intended for passing screws 17 is made in the center of every face of the shell. The working cassette upper end portion and lower end portion are fixedly connected to the angular support elements 5 by screw connections, the screw threaded parts interacting with a corresponding thread made in the cassette lower end portion and upper end portion. Furthermore, the screw connection of the upper end portion is made separable, and that of the lower end portion is made nonseparable.

The angular support elements 5 are made of an E635 zirconium alloy sheet, and through holes 19 are made in the center of every side of the angular support element on the end of attachment to the lower end portion 15. The width **d** of the span of the angular support element 5 is selected so as to be in the range from 1.71·t to 1.91-t, where **t** is the triangular grid pitch being from 12.55 millimeters to 12.65 millimeters. The angular support elements 5 are connected to the rims 20 of the spacers 4 by contact-spot welding.

Furthermore, the angular support elements 5 are provided with stiffening ribs made in the spans between the spacers 4 and the lower end portion 15 that have the form of flange portions bent inside the working cassette at an angle of 90° to the angular support elements.

The upper end portion 18 is made of a stainless steel and provided with six spring stops 21 keeping the working cassette from floating up and serving as compensators of temperature expansion and process tolerances for the devices that are within the reactor vessel.

The lower end portion 15 of the cassette is made of a stainless steel, designed for arranging the working cassette in the bottom of the reactor barrel and rests with its ball surface 22 against the conical portion of the cradle. In order to be oriented in plan, the lower end portion 15 is provided with a retaining pin 23, and a corresponding slot is made in the barrel bottom. It is recommended that an anti-debris filter 24, which may consist of, for example, a set of concentric rings, should be arranged by welding on the inner conical surface of the lower end portion 15 of the working cassette.

The number of fuel elements in the cassette is from 120 to 123, and the "turn-key" size of the cassette is 145.5 millimeters.

The working cassette according to this invention may be operated in the known (standard) mode. A cold coolant is fed into the bottom part of the reactor core and, flowing in the working cassettes from bottom to top, washes the surfaces of the fuel elements 3 and, thus, removes heat from nuclear fuel located in the fuel elements. The fuel assembly in accordance with this invention may be fabricated with the use of conventional technologies on known equipment and does not require development of special means and tools.

The above-described working cassette enables to increase the cassette resistance against axial loads, which is especially important for operations of reloading working cassettes. The point is that when a cassette is removed from the core, the cassette upper portion may be subjected to an axial load N ∼ 20,000 N which is transferred via the hexagonal shell and then vie the welding points to the rim of the top spacer, from where this load is transferred via the welding points to the angular support elements and the upper grid that, in its turn, transfers this load to the framework tubes. The experiment-calculated justification of the claimed cassette shows that the use of the framework tubes enables to re-distribute the load between the angular support elements and the framework tubes and ensure the required strength of the cassette, including that required for fuel cycles with deep (up to 65-70 Mw-day/kg_{U}) burnup of fuel. The claimed cassette also improves the efficiency of fuel use due to increasing the water-uranium ratio. It follows from calculations that the water-uranium ratio increases by 4.3% (from 1.86 to 1.94) when three framework tubes are used and by 8.6% (from 1.86 to 2.02) when six framework tubes are used. Assessment studies of the fuel cycle and fuel burnup duration with the use of the claimed working cassette design show that the use of six zirconium framework tubes results in an increase in burnup, i.e., increased energy release per 1 kg of uranium, by approximately 6%, and an increase in the cycle duration is approximately 6.5%. Furthermore, the presence of hollow framework tubes in the cassette design enables to carry out spectral adjustment of reactivity in the core, which, in its turn, also enables to increase the depth of fuel burnup and/or the reactor life-time. Comparative calculations of a stationary cycle show that the use of six framework tubes with zirconium displacers removed after the first year of operation can increase the duration of a fuel charge operation from 0.4 to 0.8 effective days.

## Claims

1. A fuel assembly for a nuclear reactor of VVER-440 type with thermal power output from 1,150 MW to 1,700 MW, comprising a lower end portion (15) and an upper end portion (18) interconnected by a framework made of angular support elements (5) connected by contact welding to spacers (4) constructed from cells (8) arranged according to a triangular grid so as to form coaxial hexagonal rows around a central tube (1), **characterized in that** three or six framework tubes (7) are arranged at an equal angular spacing around the central tube axis in the second, or third, or the fourth row from the center, and three or six framework tubes (7) are arranged in the corners or midpoints of the sides of the row that is the third from the center, said three or six framework tubes (7) being fixedly connected to the lower end portion (15) and to the adjacent cells (8).

2. The fuel assembly according to Claim 1, **characterized in that** the three or six framework tubes (7) are arranged either in the corners of the second or the fourth row from the center, or in the midpoints of the sides of the second or the fourth row from the center.

3. The fuel assembly according to Claim 1, **characterized in that** welding is used for connecting the three or six framework tubes (7) to cells (8), and welding, or thread, or a collet is used for connecting them to the lower end portion (15).

4. The fuel assembly according to Claim 1, **characterized in that** the spacers (4) are connected to the central tube (1).

5. The fuel assembly according to Claim 1, **characterized in that** the three or six framework tubes (7) and the angular support elements (5) are made of the zirconium alloy E635.

6. The fuel assembly according to Claim 1, **characterized in that** the three or six framework tubes (7) are made with the possibility of being filled with a coolant.

7. The fuel assembly according to Claim 1, **characterized in that** the width **d** of a side of an angular support element (5) is selected so as to be in the range from 1.71·**t** to 1.9·**t**, where **t** is the pitch of the triangular grid, wherein the pitch **t** of the triangular grid is selected so as to be in the range from 12.55 millimeters to 12.65 millimeters.

8. The fuel assembly according to Claim 1, **characterized in that** the framework is connected to the upper end portion (18) via a separable connection.

9. The fuel assembly according to Claim 8, **characterized in that** a threaded connection in the form of screws (17) is used as the separable connection, wherein the threaded portion of the screws (17) interacts with corresponding thread made in the upper end portion (18).

10. A fuel assembly for a nuclear reactor of VVER-440 type with thermal power output from 1,150 MW to 1,700 MW, comprising a lower end portion (15) and an upper end portion (18) interconnected by a framework made of angular support elements (5) connected by contact welding to spacers (4) constructed from cells (8) arranged according to a triangular grid so as to form coaxial hexagonal rows around a central tube (1), **characterized in that** six framework tubes (7) are arranged in threes in equally spaced positions at an equal angular spacing of 120 degrees around the central tube axis in the corners of the third and the fourth rows or the third and the second rows from the center and are connected to the lower end portion (15) and fixedly connected to the adjacent cells (8).

11. A fuel assembly according to Claim 10, **characterized in that** welding is used for connecting the framework tubes (7) to cells, and welding, or thread, or a collet is used for connecting them to the lower end portion (15).

12. A fuel assembly according to Claim 10, **characterized in that** the spacers (4) are connected to the central tube (1).

13. A fuel assembly according to Claim 10, **characterized in that** the framework tubes (7) and the angular support elements (5) are made of the zirconium alloy E635.

14. A fuel assembly according to Claim 10, **characterized in that** the framework tubes (7) are made with the possibility of being filled with a coolant.

15. A fuel assembly according to Claim 10, **characterized in that** the width d of a side of an angular support element (5) is selected so as to be in the range from 1.71·t to 1.9·t, where **t** is the pitch of the triangular grid, wherein the pitch **t** of the triangular grid is selected so as to be in the range from 12.55 millimeters to 12.65 millimeters.

16. A fuel assembly according to Claim 10, **characterized in that** the framework is connected to the upper end portion (18) via a separable connection.

17. A fuel assembly according to Claim 16, **characterized in that** a threaded connection in the form of screws (17) is used as the separable connection, wherein the threaded portion of the screws (17) interacts with corresponding thread made in the upper end portion (18).

18. A fuel assembly for a nuclear reactor of VVER-440 type with thermal power output from 1,150 MW to 1,700 MW, comprising a lower end portion (15) and an upper end portion (18) interconnected by a framework made of angular support elements (5) connected by contact welding to spacers (4) constructed from cells (8) arranged according to a triangular grid so as to form coaxial hexagonal rows around a central tube (1), **characterized in that** six framework tubes (7) are arranged in threes in equally spaced positions at an equal angular spacing of 120 degrees around the central tube axis in the corners or in the midpoints of sides of the fourth and second rows from the center and are connected to the lower end portion (15) and fixedly connected to the adjacent cells (8).

19. A fuel assembly according to Claim 18, **characterized in that** welding is used for connecting the framework tubes (7) to cells (8), and welding, or thread, or a collet is used for connecting them to the lower end portion (15).

20. A fuel assembly according to Claim 18, **characterized in that** the spacers (4) are connected to the central tube (1).

21. A fuel assembly according to Claim 18, **characterized in that** the framework tubes (7) and the angular support elements (5) are made of the zirconium alloy E635.

22. A fuel assembly according to Claim 18, **characterized in that** the framework tubes (7) are made with the possibility of being filled with a coolant.

23. A fuel assembly according to Claim 18, **characterized in that** the width **d** of a side of an angular support element (5) is selected so as to be in the range from 1.71·t to 1.9·t, where **t** is the pitch of the triangular grid, wherein the pitch t of the triangular grid is selected so as to be in the range from 12.55 millimeters to 12.65 millimeters.

24. A fuel assembly according to Claim 18, **characterized in that** the framework is connected to the upper end portion (18) via a separable connection.

25. A fuel assembly according to Claim 24, **characterized in that** a threaded connection in the form of screws (17) is used as the separable connection, wherein the threaded portion of the screws (17) interacts with corresponding thread made in the upper end portion (18).

## Patentansprüche

1. Brennanordnung für einen Kernreaktor des Typs VVER-440 mit einer thermischen Leistung von 1,150 MW bis 1,700 MW, die einen unteren Endabschnitt (15) und einen oberen Endabschnitt (18) umfasst, die miteinander durch einen Rahmen verbunden sind, der aus Winkelstützelementen (5) besteht, die durch Kontaktschweißen mit Abstandshaltern (4) verbunden sind, die aus Zellen (8) bestehen, die gemäß einem Dreiecksgitternetz angeordnet sind, so dass koaxiale hexagonale Reihen um eine mittige Röhre (1) herum gebildet werden, **dadurch gekennzeichnet, dass** drei oder sechs Rahmenröhren (7) in einem gleichmäßigen Winkelabstand um die Röhrenmittelachse in der zweiten oder dritten oder vierten Reihe von der Mitte aus angeordnet sind und drei oder sechs Rahmenröhren (7) in den Ecken oder Mittelpunkten der Seiten der Reihe angeordnet sind, welche die dritte von der Mitte aus ist, wobei die drei oder sechs Rahmenröhren (7) fest mit dem unteren Endabschnitt (15) und mit den benachbarten Zellen (8) verbunden sind.

2. Brennanordnung nach Anspruch 1, **dadurch gekennzeichnet, dass** die drei oder sechs Rahmenröhren (7) entweder in den Ecken der zweiten oder der vierten Reihe von der Mitte aus oder in den Mittelpunkten der Seiten der zweiten oder der vierten Reihe von der Mitte aus angeordnet sind.

3. Brennanordnung nach Anspruch 1, **dadurch gekennzeichnet, dass** Schweißen zum Verbinden der drei oder sechs Rahmenröhren (7) mit Zellen (8) verwendet wird und dass Schweißen oder Verschrauben oder eine Klemmhülse zu ihrem Verbinden mit dem unteren Endabschnitt (15) verwendet wird.

4. Brennanordnung nach Anspruch 1, **dadurch gekennzeichnet, dass** die Abstandshalter (4) mit der mittigen Röhre (1) verbunden sind.

5. Brennanordnung nach Anspruch 1, **dadurch gekennzeichnet, dass** die drei oder sechs Rahmenröhren (7) und die Winkelstützelemente (5) aus der Zirkonlegierung E635 bestehen.

6. Brennanordnung nach Anspruch 1, **dadurch gekennzeichnet, dass** die drei oder sechs Rahmenröhren (7) mit der Möglichkeit hergestellt sind, mit einem Kühlmittel gefüllt zu werden.

7. Brennanordnung nach Anspruch 1, **dadurch gekennzeichnet, dass** die Breite d einer Seite eines Winkelstützelements (5) so gewählt ist, dass sie im Bereich von 1,71 t bis 1,9 t liegt, wobei t der Mittenabstand des Dreiecksgitternetzes ist, wobei der Mittenabstand t des Dreiecksgitternetzes so gewählt ist, dass er im Bereich von 12,55 Millimeter bis 12,65 Millimeter liegt.

8. Brennanordnung nach Anspruch 1, **dadurch gekennzeichnet, dass** der Rahmen über eine lösbare Verbindung mit dem oberen Endabschnitt (18) verbunden ist.

9. Brennanordnung nach Anspruch 8, **dadurch gekennzeichnet, dass** eine Schraubverbindung in Form von Schrauben (17) als die lösbare Verbindung verwendet wird, wobei der Gewindeabschnitt der Schrauben (17) mit einem entsprechenden Gewinde interagiert, das in dem oberen Endabschnitt (18) ausgebildet ist.

10. Brennanordnung für einen Kernreaktor des Typs VVER-440 mit einer thermischen Leistung von 1,150 MW bis 1,700 MW, die einen unteren Endabschnitt (15) und einen oberen Endabschnitt (18) umfasst, die miteinander durch einen Rahmen verbunden sind, der aus Winkelstützelementen (5) besteht, die durch Kontaktschweißen mit Abstandshaltern (4) verbunden sind, die aus Zellen (8) bestehen, die gemäß einem Dreiecksgitternetz angeordnet sind, so dass koaxiale hexagonale Reihen um eine mittige Röhre (1) herum gebildet werden, **dadurch gekennzeichnet, dass** sechs Rahmenröhren (7) zu dreien in gleichmäßig voneinander beabstandeten Positionen in einem gleichen Winkelabstand von 120 Grad um die Röhrenmittelachse in den Ecken der dritten und der vierten Reihen oder der dritten und der zweiten Reihen von der Mitte aus angeordnet sind und mit dem unteren Endabschnitt (15) verbunden sind und fest mit den benachbarten Zellen (8) verbunden sind.

11. Brennanordnung nach Anspruch 10, **dadurch gekennzeichnet, dass** Schweißen zum Verbinden der Rahmenröhren (7) mit Zellen (8) verwendet wird und dass Schweißen oder Verschrauben oder eine Klemmhülse zu ihrem Verbinden mit dem unteren Endabschnitt (15) verwendet wird.

12. Brennanordnung nach Anspruch 10, **dadurch gekennzeichnet, dass** die Abstandshalter (4) mit der mittigen Röhre (1) verbunden sind.

13. Brennanordnung nach Anspruch 10, **dadurch gekennzeichnet, dass** die Rahmenröhren (7) und die Winkelstützelemente (5) aus der Zirkonlegierung E635 bestehen.

14. Brennanordnung nach Anspruch 10, **dadurch gekennzeichnet, dass** die Rahmenröhren (7) mit der Möglichkeit hergestellt sind, mit einem Kühlmittel gefüllt zu werden.

15. Brennanordnung nach Anspruch 10, **dadurch gekennzeichnet, dass** die Breite d einer Seite eines Winkelstützelements (5) so gewählt ist, dass sie im Bereich von 1,71 t bis 1,9 t liegt, wobei t der Mittenabstand des Dreiecksgitternetzes ist, wobei der Mittenabstand t des Dreiecksgitternetzes so gewählt ist, dass er im Bereich von 12,55 Millimeter bis 12,65 Millimeter liegt.

16. Brennanordnung nach Anspruch 10, **dadurch gekennzeichnet, dass** der Rahmen über eine lösbare Verbindung mit dem oberen Endabschnitt (18) verbunden ist.

17. Brennanordnung nach Anspruch 16, **dadurch gekennzeichnet, dass** eine Schraubverbindung in Form von Schrauben (17) als die lösbare Verbindung verwendet wird, wobei der Gewindeabschnitt der Schrauben (17) mit einem entsprechenden Gewinde interagiert, das in dem oberen Endabschnitt (18) ausgebildet ist.

18. Brennanordnung für einen Kernreaktor des Typs VVER-440 mit einer thermischen Leistung von 1,150 MW bis 1,700 MW, die einen unteren Endabschnitt (15) und einen oberen Endabschnitt (18) umfasst, die miteinander durch einen Rahmen verbunden sind, der aus Winkelstützelementen (5) besteht, die durch Kontaktschweißen mit Abstandshaltern (4) verbunden sind, die aus Zellen (8) bestehen, die gemäß einem Dreiecksgitternetz angeordnet sind, so dass koaxiale hexagonale Reihen um eine mittige Röhre (1) herum gebildet werden, **dadurch gekennzeichnet, dass** sechs Rahmenröhren (7) zu dreien in gleichmäßig voneinander beabstandeten Positionen in einem gleichen Winkelabstand von 120 Grad um die Röhrenmittelachse in den Ecken oder in den Mittelpunkten der Seiten der vierten und der zweiten Reihen von der Mitte aus angeordnet sind und mit dem unteren Endabschnitt (15) verbunden sind und fest mit den benachbarten Zellen (8) verbunden sind.

19. Brennanordnung nach Anspruch 18, **dadurch gekennzeichnet, dass** Schweißen zum Verbinden der Rahmenröhren (7) mit Zellen (8) verwendet wird und dass Schweißen oder Verschrauben oder eine Klemmhülse zu ihrem Verbinden mit dem unteren Endabschnitt (15) verwendet wird.

20. Brennanordnung nach Anspruch 18, **dadurch gekennzeichnet, dass** die Abstandshalter (4) mit der mittigen Röhre (1) verbunden sind.

21. Brennanordnung nach Anspruch 18, **dadurch gekennzeichnet, dass** die Rahmenröhren (7) und die Winkelstützelemente (5) aus der Zirkonlegierung E635 bestehen.

22. Brennanordnung nach Anspruch 18, **dadurch gekennzeichnet, dass** die Rahmenröhren (7) mit der Möglichkeit hergestellt sind, mit einem Kühlmittel gefüllt zu werden.

23. Brennanordnung nach Anspruch 18, **dadurch gekennzeichnet, dass** die Breite d einer Seite eines Winkelstützelements (5) so gewählt ist, dass sie im Bereich von 1,71 t bis 1,9 t liegt, wobei t der Mittenabstand des Dreiecksgitternetzes ist, wobei der Mittenabstand t des Dreiecksgitternetzes so gewählt ist, dass er im Bereich von 12,55 Millimeter bis 12,65 Millimeter liegt.

24. Brennanordnung nach Anspruch 18, **dadurch gekennzeichnet, dass** der Rahmen über eine lösbare Verbindung mit dem oberen Endabschnitt (18) verbunden ist.

25. Brennanordnung nach Anspruch 24, **dadurch gekennzeichnet, dass** eine Schraubverbindung in Form von Schrauben (17) als die lösbare Verbindung verwendet wird, wobei der Gewindeabschnitt der Schrauben (17) mit einem entsprechenden Gewinde interagiert, das in dem oberen Endabschnitt (18) ausgebildet ist.

## Revendications

1. Assemblage combustible pour un réacteur nucléaire de type VVER-440, avec puissance de sortie thermique comprise entre 1150 MW et 1700 MW, comprenant une partie d'extrémité inférieure (15) et une partie d'extrémité supérieure (18) reliées entre elles par une structure constituée d'éléments de support angulaires (5) reliés par soudage par contact à des patins d'espacement (4) construits à partir de cellules (8) agencées selon une grille triangulaire de manière à former des rangées hexagonales coaxiales autour d'un tube central (1), **caractérisé en ce que** trois à six tubes de structure (7) sont agencés à un espacement angulaire égal autour de l'axe du tube central dans la deuxième, la troisième ou la quatrième rangée à partir du centre, et trois ou six tubes de structure (7) sont agencés dans les coins ou les milieux des côtés de la rangée qui est la troisième à partir du centre, lesdits trois ou six tubes de structure (7) étant reliés de manière fixe à la partie d'extrémité inférieure (15) et aux cellules adjacentes (8).

2. Assemblage combustible selon la revendication 1, **caractérisé en ce que** les trois ou six tubes de structure (7) sont agencés soit dans les coins de la deuxième ou de la quatrième rangée à partir du centre, soit dans les milieux des côtés de la deuxième ou de la quatrième rangée à partir du centre.

3. Assemblage combustible selon la revendication 1, **caractérisé en ce qu'**une soudure est utilisée pour relier les trois ou six tubes de structure (7) aux cellules (8), et une soudure,un filetage ou une douille de serrage est utilisé pour les relier à la partie d'extrémité inférieure (15).

4. Assemblage combustible selon la revendication 1, **caractérisé en ce que** les patins d'espacement (4) sont reliés au tube central (1).

5. Assemblage combustible selon la revendication 1, **caractérisé en ce que** les trois ou six tubes de structure (7) et les éléments de support angulaires (5) sont constitués de l'alliage de zirconium E635.

6. Assemblage combustible selon la revendication 1, **caractérisé en ce que** les trois ou six tubes de structure (7) sont fabriqués avec la possibilité d'être remplis d'un liquide de refroidissement.

7. Assemblage combustible selon la revendication 1, **caractérisé en ce que** la largeur d d'un côté d'un élément de support angulaire (5) est choisie de manière à être située dans la plage allant de 1,71·t à 1,9·t, où t est le pas de la grille triangulaire, dans lequel le pas t de la grille triangulaire est choisi de manière à être situé dans la plage allant de 12,55 mm à 12,65 mm.

8. Assemblage combustible selon la revendication 1, **caractérisé en ce que** la structure est reliée à la partie d'extrémité supérieure (18) par une liaison amovible.

9. Assemblage combustible selon la revendication 8, **caractérisé en ce qu'**un raccord fileté sous forme de vis (17) est utilisé en tant que la liaison amovible, dans lequel la partie filetée des vis (17) coopère avec un filetage correspondant réalisé dans la partie d'extrémité supérieure (18).

10. Assemblage combustible pour un réacteur nucléaire de type VVER-440 avec une puissance de sortie thermique comprise entre 1150 MW et 1700 MW, comprenant une partie d'extrémité inférieure (15) et une partie d'extrémité supérieure (18) reliées entre elles par une structure constituée d'éléments de support angulaires (5) reliés par soudage par contact à des patins d'espacement (4) construits à partir de cellules (8) agencées selon une grille triangulaire de manière à former des rangées hexagonales coaxiales autour d'un tube central (1), **caractérisé en ce que** six tubes de structure (7) sont agencés par groupes de trois dans des positions espacées de manière égale à un espacement angulaire égal de 120 degrés autour de l'axe du tube central dans les coins de la troisième et de la quatrième rangée ou de la troisième et de la deuxième rangée à partir du centre, et sont reliés à la partie d'extrémité inférieure (15) et reliés de manière fixe aux cellules adjacentes (8).

11. Assemblage combustible selon la revendication 10, **caractérisé en ce qu'**une soudure est utilisée pour relier les tubes de structure (7) aux cellules, et une soudure, un filetage ou une douille de serrage est utilisé pour les raccorder à la partie d'extrémité inférieure (15).

12. Assemblage combustible selon la revendication 10, **caractérisé en ce que** les patins d'espacement (4) sont reliés au tube central (1).

13. Assemblage combustible selon la revendication 10, **caractérisé en ce que** les tubes de structure (7) et les éléments de support angulaires (5) sont constitués de l'alliage de zirconium E635.

14. Assemblage combustible selon la revendication 10, **caractérisé en ce que** les tubes de structure (7) sont fabriqués avec la possibilité d'être remplis d'un liquide de refroidissement.

15. Assemblage combustible selon la revendication 10, **caractérisé en ce que** la largeur d d'un côté d'un élément de support angulaire (5) est choisie de manière à être située dans la plage allant de 1,71·t à 1,9·t, où t est le pas de la grille triangulaire, dans lequel le pas t de la grille triangulaire est choisi de manière à être dans la plage allant de 12,55 mm à 12,65 mm.

16. Assemblage combustible selon la revendication 10, **caractérisé en ce que** la structure est reliée à la partie d'extrémité supérieure (18) par une liaison amovible.

17. Assemblage combustible selon la revendication 16, **caractérisé en ce qu'**un raccord fileté sous forme de vis (17) est utilisé en tant que la liaison amovible, dans lequel la partie filetée 4 des vis (17) coopère avec un filetage correspondant réalisé dans la partie d'extrémité supérieure (18).

18. Assemblage combustible pour un réacteur nucléaire du type de VVER-440 avec une puissance de sortie thermique comprise entre 1150 MW et 1700 MW, comprenant une partie d'extrémité inférieure (15) et une partie d'extrémité supérieure (18) reliées entre elles par une structure constituée d'éléments de support angulaires (5) reliés par soudage par contact à des patins d'espacement (4) construits à partir de cellules (8) agencées selon une grille triangulaire de manière à former des rangées hexagonales coaxiales autour d'un tube central (1), **caractérisé en ce que** six tubes de structure (7) sont agencés par groupes de trois dans des positions espacées de manière égale à un espacement angulaire de 120 degrés autour de l'axe du tube central dans les coins ou dans les milieux des côtés de la quatrième et de la deuxième rangée à partir du centre, et sont reliés à la partie d'extrémité inférieure (15) et reliés de manière fixe aux cellules adjacentes (8).

19. Assemblage combustible selon la revendication 18, **caractérisé en ce qu'**une soudure est utilisée pour relier les tubes de structure (7) aux cellules (8), et une soudure, un filetage ou une douille de serrage est utilisé pour les relier à la partie d'extrémité inférieure (15).

20. Assemblage combustible selon la revendication 18, **caractérisé en ce que** les patins d'espacement (4) sont reliés au tube central (1).

21. Assemblage combustible selon la revendication 18, **caractérisé en ce que** les tubes de structure (7) et les éléments de support angulaires (5) sont constitués de l'alliage de zirconium E635.

22. Assemblage combustible selon la revendication 18, **caractérisé en ce que** les tubes de structure (7) sont fabriqués avec la possibilité d'être remplis d'un liquide de refroidissement.

23. Assemblage combustible selon la revendication 18, **caractérisé en ce que** la largeur d d'un côté d'un élément de support angulaire (5) est choisie de manière à être située dans la plage allant de 1,71·t à 1,9·t, où t est le pas de la grille triangulaire, dans lequel le pas t de la grille triangulaire est choisi de manière à être dans la plage allant de 12,55 mm à 12,65 mm.

24. Assemblage combustible selon la revendication 18, **caractérisé en ce que** la structure est reliée à la partie d'extrémité supérieure (18) par une liaison amovible.

25. Assemblage combustible selon la revendication 24, **caractérisé en ce qu'**un raccord fileté sous forme de vis (17) est utilisé en tant que la liaison amovible, dans lequel la partie filetée des vis (17) coopère avec un filetage correspondant réalisé dans la partie d'extrémité supérieure (18).
